# EUROPEAN PATENT SPECIFICATION

(11) **EP 0 402 165 B1**
(45) Date of publication and mention of the grant of the patent: **15.11.1995**
(21) Application number: 90306263.6
(22) Date of filing: 08.06.1990
(51) Int. Cl.: B32B 27/04, B32B 27/08, F41H 5/04, B32B 27/02

(54) **Armour systems having high anti-piercing characteristics**
Panzerungssystem mit Eigenschaften gegen Durchlöcherung
Stratifié renforçé ayant des propriétés empêchant la perforation

(30) Priority: 09.06.1989 IT 2083389
(43) Date of publication of application: 12.12.1990
(73) Proprietor: TENCARA S.p.A., Marghera (Venezia) (IT)
(72) Inventor: Prato, Filippo, I-22036 Erba, Como (IT)
(74) Representative: Lamb, John Baxter

(56) References cited:
- EP-A- 0 002 953
- US-A- 4 732 803

## Description

The present invention relates to armour systems having high anti-piercing characteristics.

Laminar structures capable of resisting the piercing or penetration of bodies having high kinetic energy, such as stones, bullets, splinters, etc., are known in the literature. Thus, U.S. Patent 2,789,076, British patent 1,291, 821 and French patent 1,163,606 describe structures of this type, which are obtained by bonding with one another a plurality of glass fibre fabrics or man-made fibre fabrics and by using, as binder, thermosetting resins such as polyester resins, epoxy resins, phenolic resins, phenol-formaldehyde resins and the like.

Such bonded structures, although exhibiting an excellent resistance to piercing, have some drawbacks which limit their use in some specific protection sectors.

Thus, it has been observed that when one of these laminar structures is hit by a body having high kinetic energy, such as a bullet, the structure undergoes a deformation and/or a break which affects a much greater area than the shot impact area.

Since the extended break or deformation markedly reduces the anti-piercing characteristics of the bonded laminate, it follows that these structures are not able to withstand a series of concentrated or close-spaced impacts such as those which could be caused by bullets from an automatic fire arm. By consequence, the safety of those who wear a bullet-proof jacket manufactured from bonded structures such as described above is not as secure as it might be.

Multilayer structures consisting of a plurality of glass fibre fabrics or man-made fibre fabrics coated with. thermoplastic polymers are also known. U.S. patent 3,000,772 describes piercing-resistant laminates obtained by superimposing and binding together layers of polyethylene and layers of glass fibre fabric; polyethylene permits bonding between the glass fibre fabric layers.

In particular, European Patent No. 49,014 describes a piercing-resistant non-metallic reinforced panel prepared by the alternate superimposition of thermoplastic resin layers and of high-tenacity man-made fibre fabric layers such as, e.g., aramidic fibre fabric layers, in which the structural support comprises projections which extend from the thermoplastic resin layer and pass throught the interstices of the weft and warp interlacements of the fabric and bond to corresponding projections of at least another upper and/or lower thermoplastic resin layer, the interconnection between the projections and the thermoplastic material layers forming a cell-like structure, the cavities of which receive and freely encapsulate the fabric yarns without penetrating them and impregnating the fibres. However, this solution also does not completely and exhaustively meet all the requirements of the sector. In particular, the thermoplastic resin, more particularly polyethylene, tends to soften under the action of heat, which causes the flowing of the fibres and therefore a decrease in resistance to piercing of the laminate. Said decrease can reach values up to 50% higher than the normal value.

We have now found, in accordance with the present invention, that the above drawbacks can be overcome by combining together a laminate based on thermoplastic resins and a laminate based on thermosetting resins.

Accordingly, the invention provides an armour system for protection against bodies having high kinetic energy prepared from a bonded laminate having high anti-piercing characteristics and comprising a plurality of fibre material layers impregnated with a thermosetting resin and a plurality of fibre material layers impregnated with a thermoplastic resin.

The laminate of the invention exhibits, the thickness being appropriate, a minimum deformation in consequence of an impact, substantially limited to the surface of the object causing the impact, and a resistance to high temperatures, which is markedly higher than that of a laminate comprising only a thermoplastic resin.

The fibre material utilized in the bonded laminate of the invention can comprise of glass fibres or of man-made fibres. High-tenacity and high-elastic modulus man-made fibres, and in particular aramidic fibres, such as Kevlar fibres, are preferred. The fibre material can be the same in two parts which form the final bonded laminate, or it may be different, depending upon the desired properties of the laminate. The fibre material can be used both in the form of fabrics and in the form of pressed and needled felts, wherein the fibres are randomly distributed in all directions.

The thickness of the bonded laminate of the present invention will generally be from 5 to 50 mm, at least 50% of the thickness being composed of a plurality of fibre material layers impregnated with a thermosetting resin and less than 50% becoming composed of a plurality of fibre material layers impregnated with a thermoplastic resin.

In particular, if n_{A} indicates the number of layers impregnated with a thermosetting resin and n_{B} indicates the number of layers impregnated with a thermoplastic resin, it is preferable to operate with n_{A}/n_{B} ratios ranging from 1.1 to 20; the sum of n_{A}+n_{B} being from 5 to 50.

According to a preferred embodiment of the bonded laminate of the invention, the portion of laminate impregnated with a thermoplastic resin is composed of a plurality of layers, each layer consisting of a fabric prepared from aramidic fibre yarns incorporated in a matrix having a cell-like three-dimensional elastic structure and obtained by hot-pressing a thermoplastic resin inserted between the fabric layers and consisting of polyethylene films having a thickness of less than 0.1 mm.

Such a cell-like elastic structure consists of thermoplastic material projections which extend through the interstices of the weft and warp interlacements and bond with the corresponding upper and lower projections, thereby forming continuous transversal reinforcing chaings; while the portion of thermoplastic matrix not extending through said interstices form a thin laminar film interconnecting all said continuous chains. The fabric yarns are contained and freely encapsulated in the cells of said cell-like structure, without any penetration of the thermoplastic material into the yarn or impregnation of the fibres. Such a structure is described in European patent No. 49,014.

Any thermosetting resin may be used to prepare the laminate of the invention; illustrative examples of possible thermosetting resins being unsaturated polyester resins, phenolic resins, resorcin resins, epoxy resins, phenolformaldehyde resins, etc.

Similarly, any thermoplastic resin may be used to prepare the laminates, although the preferred resins are the polyolefins such as polyethylene, polypropylene, ethylene-propylene copolymers, etc.

Both the thermosetting resins and the thermoplastic resins are suitably used in amounts of from 5 to 50% by weight calculated on the final product.

The textile material oan be impregnated with the thermoplastic or thermosetting resin, or the resin can be added to the textile material by lamination.

The layer containing the thermosetting resin and the layer containing the thermoplastic resin, which together form the bonded laminate of the invention, can be bonded with each other by means of any technique known to those skilled in the art. For example they can be bonded by hot-pressing, or by using an adhesive compatible with the laminate materials. The adhesive can be the same thermoplastic or thermosetting resin as used for preparing the laminate.

According to a preferred embodiment, the bonding between the two layers is obtained by interposing between them a cellulose film which is spread, on both surfaces, with a hot melt adhesive based on an SIS (styrene-isoprene-styrene) copolymer, and by subjecting the resulting laminate to pressure.

In order that the invention may be well understood, the following Example is given by way of illustration only.

### Example

A first laminate (A) was prepared, which consisted of:
- 11 layers of a fabric of aramidic fibre (KEVLAR) yarns having a tensile strength of 180 kg/cm, an elongation at break of 6% and a count of 1,580 dtex HT; the fabric consisted of 6.7x6.7 yarns per cm² and had a weight of about 230 g per m²; and
- 12 layers of a polyethylene film having a thickness of 0.08 mm.

The laminate was subjected to heat treatment under pressure at a temperature of 185°C and a pressure of 5.5 kg/cm², for 15 minutes.

Separately, a second laminate (B) was prepared, which consisted of 22 layers of a fabric as used in the first laminate, impregnated with an unsaturated polyester resin; the resin content being 14% by weigth.

Laminate (B) was then subjected to heat treatment under pressure at a temperature of 110°C and a pressure of 100 kg/cm², for 15 minutes.

The two laminates were then adhered to each other using a biadhesive layer having a thickness of 0.10 mm.

The resulting bonded laminate was subjected to ballistic tests. Despite the fact that it is possible to subject these anti-pieroing laminates to simulative laboratory tests, when it is a question of accurately ascertaining the integrity of a bullet-resisting article, the only valid test is a test with fire-arms, the interpreation of the results being very easy also for those who are not skilled in the art. For these tests there was chosen a revolver of 357 Magnum calibre, make S. & W., model 357 Magnum, having a barrel length of 4 inches, and commercial cartridges Geco 357 M.P., the bullets of which, having pointed shape and a steel casing and weighing 10.2 grams, have a speed of the order of 380-420 m/second.

The following test conditions were employed: shot distance = 5 m; impacts perpendicular to the test specimens surface; test specimens retained by means of rubber bands and supported on a flat plasteline support; dimensions of the specimens = 200 x 200 mm.

The plasteline had a height of 30 cm, a length of 25 cm thickness of 10 cm and a consistency such that a hemispherical steel body weighing 1 kg and having a diameter of 45 mm, when dropped from a height of 2 m, caused a deformation of 25 ± 3 mm.

For comparative purposes, two comparative laminates (1) and (2) were prepared, which were like laminate (A) and laminate (B), respectively, having the same number of layers as the bonded laminate of the example.

The results of the tests were as follows:

| CHARACTERISTICS | BONDED LAMINATE OF THE EXAMPLE | COMPARATIVE LAMINATE 1 | COMPARATIVE LAMINATE 2 |
|---|---|---|---|
| - Average deformation of the laminate | 20 mm | 27 mm | 24 mm |
| - Average deformation of plasteline | 24 mm | 34 mm | 29 mm |
| - Average distance of the shots | 55 mm | 55 mm | 65 mm |
| - Damaged area | 1,955 mm² | 1,955 mm² | 7,850 mm² |

For temperature resistance tests, the following technique was employed.

The test specimens to be tested were placed on a plasteline having the same dimensions and the same consistence as noted above and were retained by means of rubber bands. Each specimen was fired with a revolver as defined above, from a distance of 5 metres. The plasteline deformations obtained after treatment of the specimens at 60°C for 6 hours were as follows:

| | |
|---|---|
| - BONDED LAMINATE OF THE EXAMPLE: | 27 mm |
| - COMPARATIVE LAMINATE 1: | 26 mm |
| - COMPARATIVE LAMINATE 2: | 31 mm |

## Claims

1. Armour systems for protection against bodies having high kinetic energy prepared from a bonded laminate having high anti-piercing characteristics and comprising a plurality of fibre material layers impregnated with a thermosetting resin and a plurality of fibre material layers impregnated with a thermoplastic resin.

2. Armour systems according to claim 1 wherein the laminate has a thickness of from 5 to 50 mm and at least 50% of which thickness consists of a plurality of fibre material layers impregnated with a thermosetting resin and less than 50% of which thickness consists of a plurality of fibre material layers impregnated with a thermoplastic resin.

3. Armour systems according to claim 2, wherein the sum n_{A}+n_{B} ranges from 5 to 50 and the ratio n_{A}/n_{B} is from 1.1 to 20, (in which n_{A} is the number of layers impregnated with a thermosetting resin and n_{B} is the number of layers impregnated with a thermoplastic resin).

4. Armour systems according to any of the preceding claims, wherein the fibre material is composed of glass fibres or of man-made fibres.

5. Armour systems according to claim 4, wherein the fibre material is composed of high-tenacity and high-modulus man-made fibres, in particular of aramidic fibres.

6. Armour systems according to any of the preceding claims, wherein the fibre material is in the form of a fabric or a felt.

7. Armour systems according to any of the preceding claims, wherein the laminate portion impregnated with a thermoplastic resin is composed of plurality of layers, each layer consisting of a fabric prepared from aramidic fibre yarns incorporated in a cell-like three-dimensional elastic structure matrix, which consists of thermoplastic material projections passing through the interstices of the weft and warp interlacements of the fabric and bonding with corresponding upper and lower projections, thereby forming continuous reinforcing chains interconnected with the thermoplastic matrix portion which does not extend through said interstices and is placed between the fabric layers; the fabric yarns being contained and freely encapsulated in the cells of said cell-like structure.

8. Armour systems according to any of the preceding claims, wherein the thermosetting resin is an unsaturated polyester resin.

9. Armour systems according to any of the preceding claims, wherein the thermoplastic resin is polyethylene.

## Patentansprüche

1. Panzerungssystem zum Schutz gegen Körper mit hoher kinetischer Energie, hergestellt aus einem verbundenen Laminat mit guten Eigenschaften gegen Durchlöcherung und umfassend eine Vielzahl von Fasermaterialschichten, die mit einem hitzehärtbaren Harz imprägniert sind, und eine Vielzahl von Fasermaterialschichten, die mit einem thermoplastischen Harz imprägniert sind.

2. Panzerungssystem nach Anspruch 1, worin das Laminat eine Dicke von 5 bis 50 mm hat, und wenigstens 50 % dieser Dicke aus einer Vielzahl von Fasermaterialschichten besteht, die mit einem hitzehärtbarem Harz imprägniert sind, und nicht mehr als 50 % von dessen Dicke aus einer Vielzahl von Fasermaterialschichten besteht, die mit einem thermoplastischen Harz imprägniert sind.

3. Panzerungssystem nach Anspruch 2, worin die Summe n_{A} + n_{B} im Bereich von 5 bis 50 liegt und das Verhältnis n_{A}/n_{B} von 1,1 bis 20 beträgt (worin n_{A} die Anzahl der Schichten ist, die mit einem hitzehärtbaren Harz imprägniert sind, und n_{B} die Anzahl der Schichten ist, die mit einem thermoplastischen Harz imprägniert sind).

4. Panzerungssystem nach einem der vorangegangenen Ansprüche, worin das Fasermaterial aus Glasfasern oder aus synthetischen Fasern besteht.

5. Panzerungssystem nach Anspruch 4, worin das Fasermaterial aus synthetischen Fasern mit hoher Zähigkeit und hohem Modul besteht, insbesondere aus Aramidfasern.

6. Panzerungssystem nach einem der vorangegangenen Ansprüche, worin das Fasermaterial in Form eines Gewebes oder eines Filzes vorliegt.

7. Panzerungssystem nach einem der vorangegangenen Ansprüche, worin der Laminatteil, der mit einem thermoplastischen Harz imprägniert ist, aus einer Vielzahl von schichten besteht, worin jede Schicht aus einem Gewebe besteht, hergestellt aus Aramid-Fasergarnen, eingeschlossen in eine zellähnliche, dreidimensionale, elastische Strukturmatrix, die aus thermoplastischen Materialvorsprüngen besteht, die durch die Zwischenräume der Webstellen von Kette und Schuß des Gewebes hindurchgehen, und wobei die entsprechenden oberen und unteren Vorsprünge miteinander verbunden sind, wodurch ununterbrochene Verstärkungsketten gebildet werden, die mit dem thermoplastischen Matrixteil verbunden sind, der sich nicht durch die Zwischenräume hindurch erstreckt und zwischen den Gewebeschichten angeordnet ist; wobei die Gewebegarne in den Zellen der zellähnlichen Struktur enthalten und frei umkapselt sind.

8. Panzerungssystem nach einem der vorangegangenen Ansprüche, worin das hitzehärtbare Harz ein ungesättigtes Polyesterharz ist.

9. Panzerungssystem nach einem der vorangegangenen Ansprüche, worin das thermoplastische Harz Polyethylen ist.

## Revendications

1. Système de protection pour la protection contre des corps animés une énergie cinétique élevée, préparés à partir d'un stratifié lié ayant de hautes caractéristiques anti-perforation et comprenant plusieurs couches de matériau en fibres imprégnées d'une résine thermodurcissable et plusieurs couches de matériau en fibres imprégnées d'une résine thermoplastique.

2. Système de protection suivant la revendication 1, dans lesquels le stratifié a une épaisseur de 5 à 50 mm et au moins 50% de l'épaisseur consistent en plusieurs couches de matériau en fibres imprégnées d'une résine thermodurcissable et moins de 50% de l'épaisseur consistent en plusieurs couches de matériau en fibres imprégnées d'une résine thermoplastique.

3. Système de protection suivant la revendication 1, dans lesquels la somme nA+nB est comprise dans la gamme de 5 à 50 et le rapport nA/nB est compris entre 1,1 et 20 (où nA indique le nombre de couches imprégnées d'une résine thermodurcissable et nB est le nombre de couches imprégnées d'une résine thermoplastique.

4. Système de protection suivant l'une quelconque des revendications précédentes, dans lesquels le matériau en fibres est composé de fibres de verre ou de fibres artificielles.

5. Système de protection suivant la revendication 4, dans lesquels le matériau en fibres est composé de fibres artificielles de haute tenacité et de module élevé, en particulier de fibres aramides.

6. Système de protection suivant l'une quelconque des revendications précédentes, dans lesquels le matériau en fibres est sous la forme d'un tissu ou d'un feutre.

7. Système de protection suivant l'une quelconque des revendications précédentes, dans lesquels la partie du stratifié imprégnée d'une résine thermoplastique est composée de plusieurs couches, chaque couche consistant en un tissu préparé à partir de fils de fibres aramides incorporés dans une matrice ayant une structure élastique tridimensionnelle ressemblant à des cellules, qui consiste en protubérances de matière thermoplastique qui passent à travers les interstices des entrecroisements de la trame et de la chaîne et sont liées à des protubérances supérieures et inférieures correspondantes, de façon à former des chaînes de renforcement continues raccordées avec la partie de matrice thermoplastique qui ne se prolonge pas à travers ces interstices et est placée entre les couches de tissu, les fils de tissu étant contenus et encapsulés librement dans les cellules de cette structure ressemblant à des cellules.

8. Système de protection suivant l'une quelconque des revendications précédentes, dans lesquels la résine thermodurcissable est une résine polyester insaturée.

9. Système de protection suivant l'une quelconque des revendications précédentes, dans lesquels la résine thermoplastique est un polyéthylène.
